# EUROPEAN PATENT APPLICATION

(11) **EP 3 694 115 A1**
(43) Date of publication of application: **12.08.2020**
(21) Application number: 20156746.8
(22) Date of filing: 11.02.2020
(51) Int. Cl.: H04B 7/185, B64F 5/60, B64D 45/00

(54) **SYSTEM AND METHOD FOR TRANSMITTING DATA FROM AN AIRCRAFT**

(30) Priority: 11.02.2019 US 201962803826 P
(71) Applicant: Pratt & Whitney Canada Corp., Longueuil, Québec J4G 1A1 (CA)
(72) Inventor: FORTIN, Frederic, Longueuil, Québec J4G 1A1 (CA); JARVO, James, Longueuil, Québec J4G 1A1 (CA); MILLER, Jonathan, Longueuil, Québec J4G 1A1 (CA)
(74) Representative: Dehns

(57) **Abstract**

A system and method for transmitting data from an aircraft (100), the aircraft (100) comprising at least one engine (102). Aircraft input indicative of a request to enable a maintenance mode of operation of at least one engine controller (104) for the at least one engine (102) is received at the at least one engine controller (104). In response to receiving the aircraft input, a control signal comprising instructions to enable a wireless access point mode of operation of a data collection and transmission unit (108) of the aircraft (100) is output by the at least one engine controller (104) to the data collection and transmission unit (108) of the aircraft (100).

## Description

### TECHNICAL FIELD

The present disclosure relates generally to transmitting data from an aircraft.

### BACKGROUND OF THE ART

Data is typically collected from various areas of an aircraft and periodically or punctually provided to monitoring stations. For this purpose, the aircraft can be provided with one or more devices configured to gather, store, process, and transmit the data. Dedicated test equipment is however often required for gaining access to the collected data and performing operations such as troubleshooting and maintenance. Wired connections are also generally used to connect the test equipment to the data collection devices, proving cumbersome and time consuming. Therefore, improvements are needed.

### SUMMARY

In accordance with an aspect of the present invention, there is provided a computer-implemented method for transmitting data from an aircraft, the aircraft comprising at least one engine. The method comprises, at at least one an engine controller for the at least one engine, receiving an aircraft input indicative of a request to enable a maintenance mode of operation of the at least one engine controller, and in response to receiving the aircraft input, outputting, to a data collection and transmission unit of the aircraft, a control signal comprising instructions to enable a wireless access point mode of operation of the data collection and transmission unit. In embodiments, the method comprises the at least one engine controller enabling the wireless access point mode of operation of the data collection and transmission unit. In embodiments, the aircraft input is received from a ground server and/or aircraft systems, which may comprise flight controls, electric systems and/or auxiliary power units.

In an embodiment according to any of the previous embodiments, the method further comprises enabling the maintenance mode of operation of the at least one engine controller in response to receiving the aircraft input. In embodiments, when the maintenance mode of operation is enabled, the at least one engine controller may be configured to perform a number of operations including, but not limited to, failure analysis, troubleshooting, engine power checks, and data transfer.

In an embodiment according to any of the previous embodiments, the aircraft input is a discrete input received in response to actuation of a maintenance mode switch located in a cockpit of the aircraft.

In an embodiment according to any of the previous embodiments, the aircraft input is a message received via a data bus.

In an embodiment according to any of the previous embodiments, the aircraft input is received while the aircraft is on ground.

In an embodiment according to any of the previous embodiments, the control signal is output comprising instructions to activate at least one wireless radio of the data collection and transmission unit in access point mode. In embodiments, the method comprises activating the at least one wireless radio of the data collection and transmission unit in access point mode.

In an embodiment according to any of the previous embodiments, the control signal, when output, causes a wireless connection to be established between the data collection and transmission unit and at least one external device for providing the at least one external device access to data collected by the data collection and transmission unit.

In an embodiment according to any of the previous embodiments, the control signal, when output, causes the wireless connection to be established for providing the at least one external device access to live engine data collected by the data collection and transmission unit while the at least one engine is running and the aircraft is on ground.

In accordance with another aspect of the present invention, there is provided a communication system for transmitting data from an aircraft, the aircraft comprising at least one engine. The system comprises a data collection and transmission unit configured to collect and transmit data received from one or more locations in the aircraft, at least one engine controller for the at least one engine, the at least one engine controller communicatively coupled to the data collection and transmission unit and comprising at least one processing unit, and at least one non-transitory computer-readable memory having stored thereon program instructions executable by the at least one processing unit for receiving an aircraft input (such as from a ground server and/or aircraft systems, which may comprise flight controls, electric systems and/or auxiliary power units) indicative of a request to enable a maintenance mode of operation of the at least one engine controller, and in response to receiving the aircraft input, outputting, to the data collection and transmission unit, a control signal comprising instructions to enable a wireless access point mode of operation of the data collection and transmission unit. In embodiments, the instructions are further executable by the at least one processing unit to enable the wireless access point mode of operation of the data collection and transmission unit.

In an embodiment according to any of the previous embodiments, the instructions are executable by the at least one processing unit for enabling the maintenance mode of operation of the at least one engine controller in response to receiving the aircraft input. In embodiments, when the maintenance mode of operation is enabled, the at least one engine controller may be configured to perform a number of operations including, but not limited to, failure analysis, troubleshooting, engine power checks, and data transfer.

In an embodiment according to any of the previous embodiments, the instructions are executable by the at least one processing unit for receiving the aircraft input comprising receiving a discrete input in response to actuation of a maintenance mode switch located in a cockpit of the aircraft.

In an embodiment according to any of the previous embodiments, the instructions are executable by the at least one processing unit for receiving the aircraft input comprising receiving a message via a data bus.

In an embodiment according to any of the previous embodiments, the instructions are executable by the at least one processing unit for receiving the aircraft input while the aircraft is on ground.

In an embodiment according to any of the previous embodiments, the instructions are executable by the at least one processing unit for outputting the control signal comprising instructions to activate at least one wireless radio of the data collection and transmission unit in access point mode.

In an embodiment according to any of the previous embodiments, the instructions are executable by the at least one processing unit for outputting the control signal comprising instructions to cause a wireless connection to be established between the data collection and transmission unit and at least one external device for providing the at least one external device access to data collected by the data collection and transmission unit.

In an embodiment according to any of the previous embodiments, the instructions are executable by the at least one processing unit for outputting the control signal comprising instructions to cause the wireless connection to be established for providing the at least one external device access to live engine data collected by the data collection and transmission unit while the at least one engine is running and the aircraft is on ground.

In accordance with yet another aspect of the present invention, there is provided a non-transitory computer readable medium having stored thereon program code executable by at least one processor for receiving an aircraft input (such as from a ground server and/or aircraft systems, which may comprise flight controls, electric systems and/or auxiliary power units) indicative of a request to enable a maintenance mode of operation of at least one engine controller for at least one engine of an aircraft, and, in response to receiving the aircraft input, outputting, to a data collection and transmission unit of the aircraft, a control signal comprising instructions to enable a wireless access point mode of operation of the data collection and transmission unit.

Features of the systems, devices, and methods described herein may be used in various combinations, in accordance with the embodiments described herein.

### BRIEF DESCRIPTION OF THE DRAWINGS

Reference is now made to the accompanying figures in which:
FIG. 1 is a schematic diagram of the environment of an aircraft, in accordance with an illustrative embodiment;
FIG. 2 is a block diagram of a computing device, in accordance with an illustrative embodiment;
FIG. 3 is a block diagram of an Electronic Engine Control (EEC), in accordance with an illustrative embodiment;
FIG. 4 is a flowchart of a method implemented by the EEC of FIG. 3 for transmitting data from the aircraft of FIG. 1, in accordance with an illustrative embodiment; and
FIG. 5 is a flowchart of a method implemented by the Data Collection and Transmission Unit (DTCU) of FIG. 1 for transmitting data from the aircraft of FIG. 1, in accordance with an illustrative embodiment.

It will be noted that throughout the appended drawings, like features are identified by like reference numerals.

### DETAILED DESCRIPTION

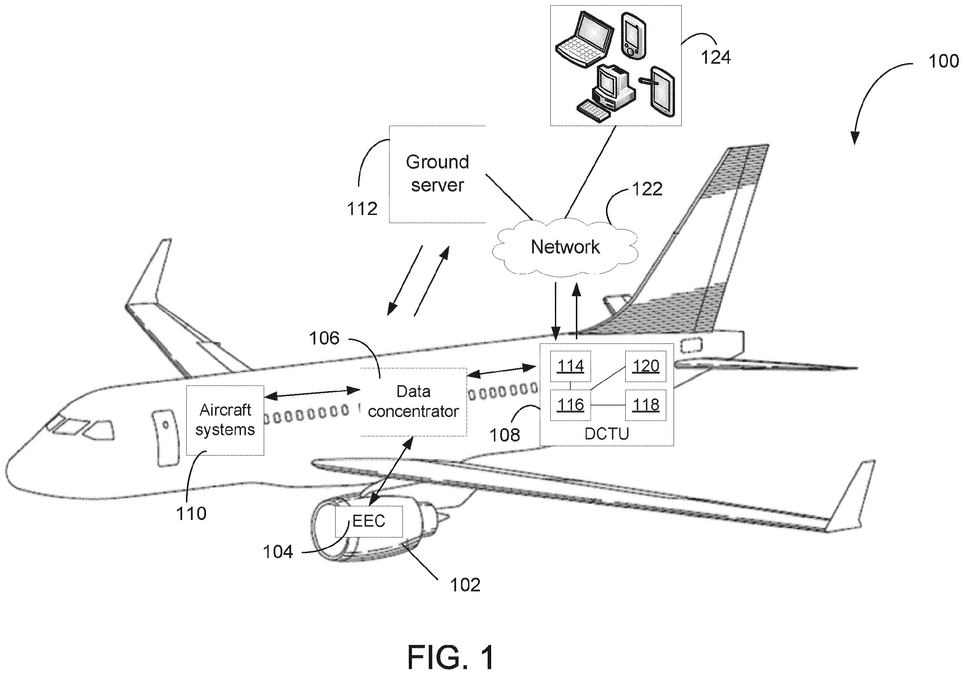

FIG. 1 illustrates the environment of an aircraft 100 comprising a plurality of gas turbine engines 102, one of which is shown. The engines 102 can each be any suitable aircraft propulsion system, and may include in some embodiments a hybrid-electric propulsion system or an all-electric propulsion system. Each engine 102 may be controlled by an Electronic Engine Control (EEC) 104, which may be part of a Full Authority Digital Engine Control (FADEC, not shown) used to control the overall operation and performance of the engine 102. A data concentrator 106 may receive via busses (not shown) data from the EEC 104 as well as from a Data Collection and Transmission Unit (DCTU) 108 and aircraft systems 110, which may comprise flight controls, electric systems, auxiliary power units, and the like. Alternatively, the data may be received directly without the data concentrator 106 being used as an intermediary. For instance, during flight, the EEC 102 may stream data (e.g., live engine data) to the DCTU 108. The aircraft systems 110 may also transmit data (referred to herein as "avionics data") to the DCTU 108. The DCTU 108 may also be operable to transmit to and receive information from a ground server 112 at least one of before, during, and after a flight. The ground server 112 may also communicate with the EEC 104 or the aircraft systems 110.

The engine and avionics data can be collected from a variety of data collection devices (e.g., sensors, not shown) mounted in the engine 102 or other areas of the aircraft 100. The engine and avionics data may also be collected from any suitable data source including, but not limited to, memory location(s) and intermediate calculation unit(s). The engine and avionics data illustratively indicates the status of the aircraft 100. For example, the engine and avionics data may indicate whether the aircraft 100 is on the ground or whether the engine 102 is running. Examples of the engine and avionics data include, but are not limited to, pressure, temperature, altitude, speed, acceleration, power, and torque.

The DCTU 108 is configured to collect, store, and process the engine data and/or the avionics data that it receives from the various locations of the aircraft 100. For this purpose, the DCTU 108 illustratively comprises a data interface 114, a processing unit 116, a memory 118, and one or more wireless radios 120 (one of which is shown in FIG. 1 for clarity purposes). The engine data and/or the avionics data is received at the interface 114 (e.g., via one or more data buses, connectors, and the like) and processed by the processing unit 116. The processing unit 116 may then output data to be stored in the memory 118. The processing unit 116 may also output data for transmission by the wireless radio(s) 120. For example, the processing unit 116 can produce messages for transmission which contain information of interest obtained from the engine data and/or the avionics data. The processing unit 116 may also output to the wireless radio(s) 120 control signals, which instruct the radio(s) 120 on operation.

The DCTU 108 is illustratively configured to communicate with the ground server 112 via a network 122. The network 122 can include a public network (e.g., the Internet), one or more cellular networks, and one or more private networks (e.g., local area networks (LANs), whether wired or wireless (for example Wi-Fi networks), cloud-computing networks, and the like), which can be interconnected in any suitable way. The engine data and/or the avionics data can then be transmitted, periodically or punctually, from the DCTU 108 to the ground server 112 for storage, analysis, or for any other purpose. In one embodiment, the DCTU 108 is implemented as a Flight-data Acquisition, Storage and Transmission (FAST™), which is an onboard engine data acquisition system configured to automatically download aircraft and engine performance data after each flight and deliver the downloaded data to a centralized database (not shown) without operator intervention.

One or more client device(s) 124 may further be configured to communicate with the DCTU 108 via the network 122. The client devices 124 may comprise any device, such as a laptop computer, a desktop computer, a personal digital assistant (PDA), a tablet, a smartphone, or the like, adapted to communicate over the network 122. The client devices 124 may be placed in the aircraft 100 (e.g., in the cockpit) and, as will be discussed further below, configured to establish a wireless connection with the DCTU 108 via the network 122 (e.g., via a wireless LAN). In this manner, the client devices 124 can wirelessly communicate with the DCTU 108 in order to obtain therefrom the engine data and/or the avionics data, which is in turn used for troubleshooting, maintenance, or any other suitable purpose.

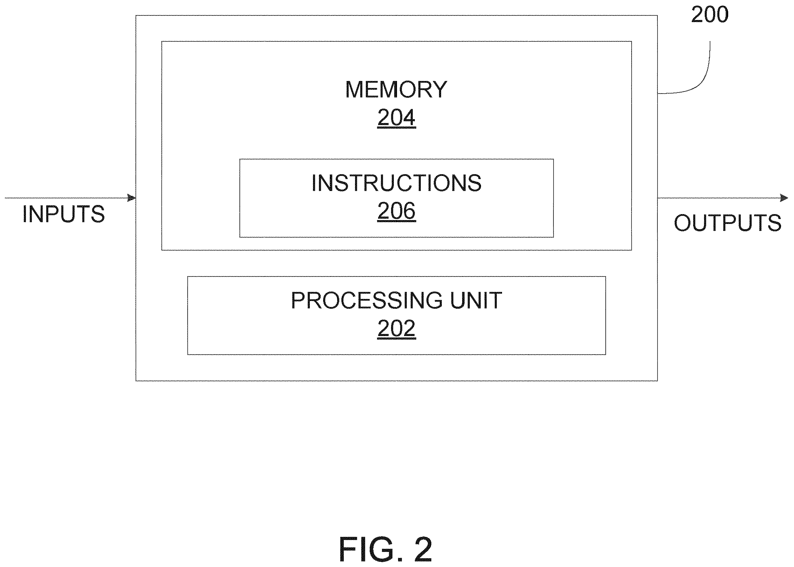

The EEC 104, DCTU 108, data concentrator 106, and client device 124 illustratively include a CPU and storage. FIG. 2 is an example embodiment of a computing device 200 for implementing each of the EEC 104, DCTU 108, data concentrator 106, and client device 124 described above with reference to FIG. 1. The computing device 200 comprises a processing unit 202 and a memory 204 which has stored therein computer-executable instructions 206. The processing unit 202 may comprise any suitable devices configured to cause a series of steps to be performed such that instructions 206, when executed by the computing device 200 or other programmable apparatus, may cause the functions/acts/steps specified in the method described herein to be executed. The processing unit 202 may comprise, for example, any type of general-purpose microprocessor or microcontroller, a digital signal processing (DSP) processor, a CPU, an integrated circuit, a field programmable gate array (FPGA), a reconfigurable processor, other suitably programmed or programmable logic circuits, or any combination thereof.

The memory 204 may comprise any suitable known or other machine-readable storage medium. The memory 204 may comprise non-transitory computer readable storage medium, for example, but not limited to, an electronic, magnetic, optical, electromagnetic, infrared, or semiconductor system, apparatus, or device, or any suitable combination of the foregoing. The memory 204 may include a suitable combination of any type of computer memory that is located either internally or externally to device, for example random-access memory (RAM), read-only memory (ROM), electro-optical memory, magneto-optical memory, erasable programmable read-only memory (EPROM), and electrically-erasable programmable read-only memory (EEPROM), Ferroelectric RAM (FRAM) or the like. Memory 204 may comprise any storage means (e.g., devices) suitable for retrievably storing machine-readable instructions 206 executable by processing unit 202.

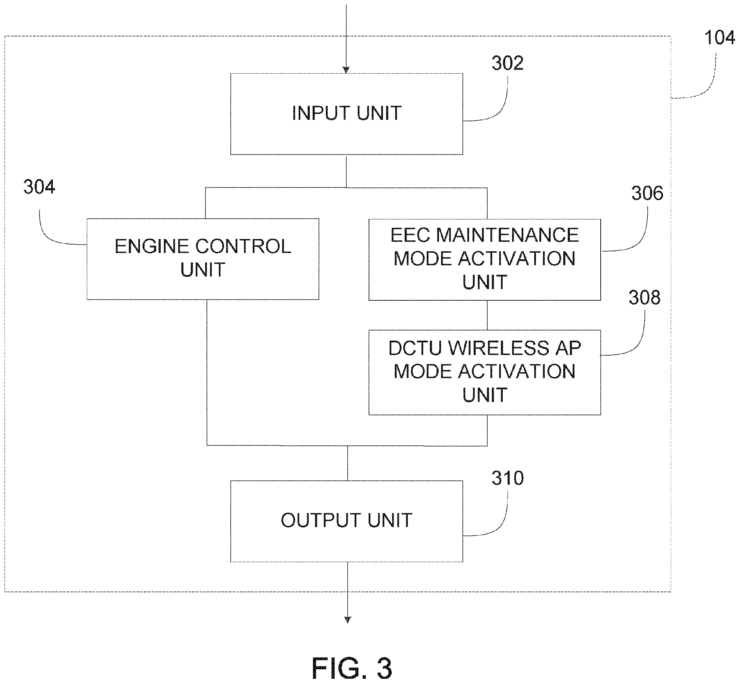

Referring now to FIG. 3 in addition to FIG. 1, the EEC 104 illustratively comprises an input unit 302, an engine control unit 304, an EEC maintenance mode activation unit 306, a DCTU wireless access point (AP) mode activation unit 308, and an output unit 310.

The input unit 302 is configured to receive one or more inputs, such as input data from the aircraft systems 110, the DCTU 108, and/or the ground server 112. The engine control unit 304 is configured to control the operation of the engine 102, based on the received input data, in a manner known to those skilled in the art. The engine control unit 304 is shown in FIG. 3 for illustrative purposes only and its mode of operation will not be detailed herein.

The EEC maintenance mode activation unit 306 is configured to enable a maintenance mode of operation of the EEC 104, based on the input received at the input unit 302. The EEC 104 may indeed be placed in a maintenance mode upon actuation of a maintenance mode switch (not shown) located on the aircraft 100 (e.g., in the cockpit maintenance panel). It should be understood that the maintenance mode may only be activated when the aircraft 100 is on the ground, i.e. the engine 102 is detected to be in a "on ground" state. Once the maintenance mode switch is actuated (e.g., moved to an "ON" (or "True") position), a corresponding discrete input signal reporting the "ON" state of the switch is received at the input unit 302 of the EEC 104. This in turn causes the EEC maintenance mode activation unit 306 to enable the maintenance mode of the EEC 104. When in the maintenance mode, the EEC 104 may be configured to perform a number of operations including, but not limited to, failure analysis, troubleshooting, engine power checks, and data transfer.

The maintenance mode switch is illustratively configured to also cause, when actuated, a wireless access point (AP) mode of operation of the DCTU 108 to be automatically activated. In other words, actuation of the maintenance mode switch turns the wireless AP ability of the DCTU 108 on. For this purpose, once the EEC 104 is placed in the maintenance mode, the EEC maintenance mode activation unit 306 signals the status of the EEC 104 to the DCTU wireless AP mode activation unit 308. The DCTU wireless AP mode activation unit 308 then generates a control signal comprising instructions to enable the wireless AP mode of the DCTU 108. In particular, the control signal comprises instructions for the DCTU 108 to activate its internal Wi-Fi radio(s) 120 and operate in AP mode. The control signal is then provided, via the output unit 310, to the DCTU 108. In one embodiment, the control signal is provided by the output unit 310 to the DCTU 108 as a discrete digital signal (also referred to herein as a "discrete output signal") that can report one of two states, i.e. an "ON" (or "True") state or an "OFF" (or "False") state. When the discrete digital signal reports an "OFF" state, this indicates to the DCTU 108 that the wireless AP mode is not to be activated. In contrast, when the discrete digital signal reports an "ON" state, this indicates to the DCTU 108 that the wireless AP mode is to be activated. It should be understood that, in order to cause activation of the DCTU's wireless AP mode, the discrete output signal will report an "ON" state. It should also be understood that, in some embodiments, the control signal for enabling the wireless AP mode of the DCTU 108 may be provided directly to the DCU 108, without the requirement for the EEC 104 to be placed in maintenance mode. In addition, it should be understood that, in some embodiments, the aircraft input received at step 404 may be a message received (e.g., from the aircraft systems 110) via a suitable data bus.

The discrete output signal (reporting the "ON" state) is illustratively received at the interface 114 of the DCTU 108 and the processing unit 116 of the DCTU 108 may in turn instruct the radio(s) 120 to turn on, thereby enabling the wireless AP mode of operation. When the DCTU 108 is operating in wireless AP mode, external computer devices, such as the client devices 124, can wirelessly connect to the DCTU 108 via the network 122 (e.g., via wireless LAN) to access data (e.g. engine data and/or avionics data) stored in the memory 118 of the DCTU 108. In particular, with the DCTU wireless AP mode active, the engine (reference 102 in FIG. 1) can be started and the devices 124 can wirelessly connect to the DCTU 108 to view live engine data streaming received from the EEC 104 and recorded by the DCTU 108. The data stored in the DCTU 108 can be viewed by the devices 124 (e.g., while the engine 102 is running) for troubleshooting, maintenance, engine health status checks, transmission testing, or the like. In one embodiment, a software application, which may be launched on each client device 124, is used to wirelessly connect a given client device 124 to the DCTU 108 and view the data recorded by the DCTU 108. Using the software application, it may be possible to query specific parameter settings and select (e.g., from an available data list) desired engine and/or avionics parameters to be accessed.

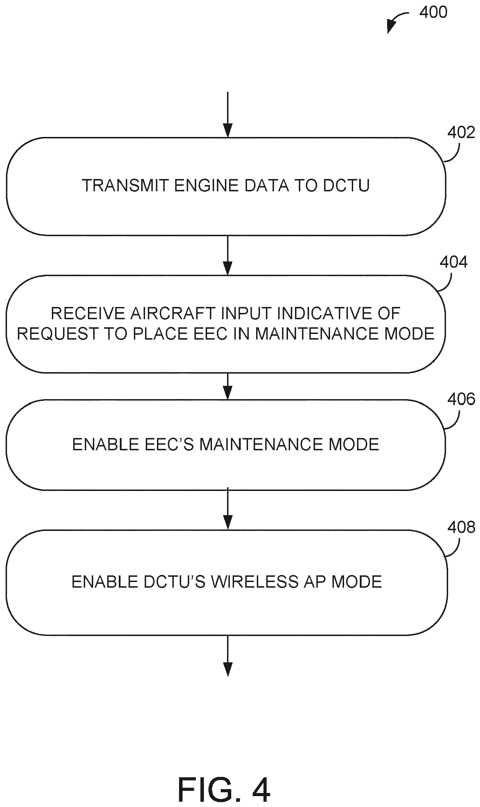

Referring now to FIG. 4, an example method 400 (implemented by the EEC 104 of FIG. 3) for transmitting data from an aircraft (such as the aircraft 100 of FIG. 1) will now be described. At step 402, engine data is transmitted to the DCTU (reference 108 in FIG. 1) for recording. It should be understood that the step 402 of transmitting engine data to the DCTU 108 may also be performed during and after enabling (at step 406) the maintenance mode for the EEC 104, for the purpose of viewing live engine data for example. An aircraft input, which is indicative of a request to place the EEC 104 in maintenance mode, is then received at step 404. As discussed above, the aircraft input may be a discrete input indicative of a current "ON" state of a maintenance mode switch. In other embodiments, the aircraft input may be a message received via a data bus. The maintenance mode of the EEC 104 is then enabled at step 406. When in maintenance mode, the EEC 104 also enables the wireless AP mode of the DCTU 108 at step 408. For this purpose, the EEC 104 provides at step 408 a discrete output signal to the DCTU 108 comprising instructions to cause the DCTU 108 to activate its internal Wi-Fi radio(s) (reference 120 in FIG. 1) and operate in AP mode. As discussed above, it should be understood that, in some embodiments, the wireless AP mode of the DCTU 108 may be enabled at step 408 by directly providing a corresponding control signal to the DCTU 108, without the requirement for the EEC 104 to be placed in maintenance mode at step 406.

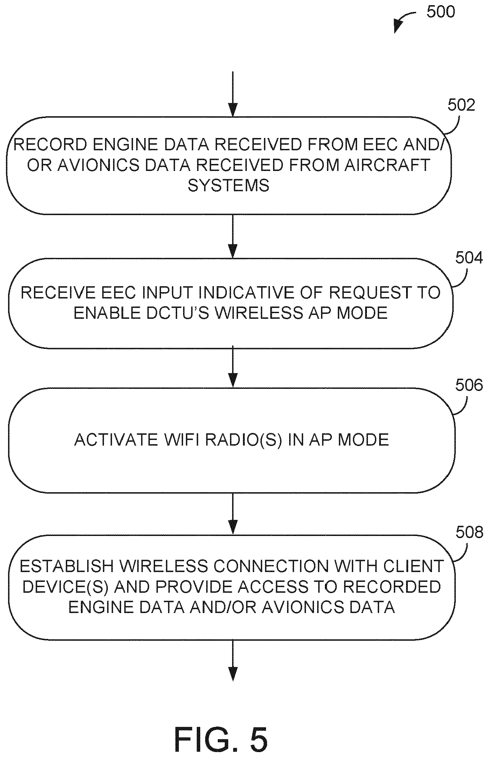

Referring now to FIG. 5, an example method 500 (implemented by the DCTU 108 of FIG. 1) for transmitting data from an aircraft (such as the aircraft 100 of FIG. 1) will now be described. Engine data received from the EEC (reference 104 in FIG. 3) is recorded at step 502. Avionics data may also be received from the aircraft systems (reference 110 in FIG. 1) and recorded by the DCTU at step 502. It should be understood that the DCTU 108 may continue to receive and record data from the EEC 104 and/or aircraft systems 110 during and after enabling (at step 506) the wireless AP mode of the DCTU 108, for the purpose of viewing live engine data for example. At step 504, the DCTU 108 then receives from the EEC 104 an input indicative of a request for the DCTU 108 to enable its wireless AP mode. In response to receiving the input from the EEC 104, the DCTU 108 activates its Wi-Fi radio(s) 120 in AP mode (step 506). With the Wi-Fi radio(s) 120 activated, a wireless connection is then established with one or more external devices (such as the client device(s) 124) and the devices are provided access to the engine data and/or the avionics data recorded at step 502 (step 508).

In one embodiment, the systems and methods described herein may prevent activation of the wireless AP mode of the DCTU 108 in flight, i.e. when the aircraft (reference 100 in FIG. 1) is airborne. Indeed, because, in one embodiment, the wireless AP mode of the DCTU 108 is enabled upon requesting to place the EEC 104 in maintenance mode and since the maintenance mode of the EEC 104 may only be enabled when the aircraft 100 is on the ground, the DCTU's wireless AP mode is in turn only enabled when the engine is detected to be in the "on ground" state.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure.

Various aspects of the systems and methods described herein may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be apparent to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A computer-implemented method for transmitting data from an aircraft (100), the aircraft (100) comprising at least one engine (102), the method comprising, at at least one engine controller (104) for the at least one engine (102):
receiving an aircraft input indicative of a request to enable a maintenance mode of operation of the at least one engine controller (104); and
in response to receiving the aircraft input, outputting, to a data collection and transmission unit (108) of the aircraft (100), a control signal comprising instructions to enable a wireless access point mode of operation of the data collection and transmission unit (108).

2. The method of claim 1, further comprising enabling the maintenance mode of operation of the at least one engine controller (104) in response to receiving the aircraft input.

3. The method of claim 1 or 2, wherein the aircraft input is a discrete input received in response to actuation of a maintenance mode switch located in a cockpit of the aircraft (100).

4. The method of claim 1 or 2, wherein the aircraft input is a message received via a data bus.

5. The method of any preceding claim, wherein the aircraft input is received while the aircraft (100) is on ground.

6. The method of any preceding claim, wherein the control signal is output comprising instructions to activate at least one wireless radio (120) of the data collection and transmission unit (108) in access point mode.

7. The method of any preceding claim, wherein the control signal, when output, causes a wireless connection to be established between the data collection and transmission unit (108) and at least one external device (124) for providing the at least one external device (124) access to data collected by the data collection and transmission unit (108), and preferably wherein the control signal, when output, causes the wireless connection to be established for providing the at least one external device access (124) to live engine data collected by the data collection and transmission unit (108) while the at least one engine (102) is running and the aircraft (100) is on ground.

8. A communication system for transmitting data from an aircraft (100), the aircraft (100) comprising at least one engine (102), the system comprising:
a data collection and transmission unit (108) configured to collect and transmit data received from one or more locations in the aircraft (100);
at least one engine controller (104) for the at least one engine (102), the at least one engine controller (104) communicatively coupled to the data collection and transmission unit (108) and comprising:
at least one processing unit (202); and
at least one non-transitory computer-readable memory (204) having stored thereon program instructions (206) executable by the at least one processing unit (202) for:
receiving an aircraft input indicative of a request to enable a maintenance mode of operation of the at least one engine controller (104); and
in response to receiving the aircraft input, outputting, to the data collection and transmission unit (108), a control signal comprising instructions to enable a wireless access point mode of operation of the data collection and transmission unit (108) .

9. The system of claim 8, wherein the instructions (206) are executable by the at least one processing unit (202) for enabling the maintenance mode of operation of the at least one engine controller (104) in response to receiving the aircraft input.

10. The system of claim 8 or 9, wherein the instructions (206) are executable by the at least one processing unit (202) for receiving the aircraft input comprising receiving a discrete input in response to actuation of a maintenance mode switch located in a cockpit of the aircraft (100).

11. The system of claim 8, 9 or 10, wherein the instructions (206) are executable by the at least one processing unit (202) for receiving the aircraft input comprising receiving a message via a data bus.

12. The system of any of claims 8 to 11, wherein the instructions (206) are executable by the at least one processing unit (202) for receiving the aircraft input while the aircraft (100) is on ground.

13. The system of any of claims 8 to 12, wherein the instructions (206) are executable by the at least one processing unit (202) for outputting the control signal comprising instructions to activate at least one wireless radio (120) of the data collection and transmission unit (108) in access point mode.

14. The system of any of claims 8 to 13, wherein the instructions (206) are executable by the at least one processing unit (202) for outputting the control signal comprising instructions to cause a wireless connection to be established between the data collection and transmission unit (108) and at least one external device for providing the at least one external device access to data collected by the data collection and transmission unit (108), and preferably wherein the instructions are executable by the at least one processing unit (202) for outputting the control signal comprising instructions to cause the wireless connection to be established for providing the at least one external device access to live engine data collected by the data collection and transmission unit (108) while the at least one engine (102) is running and the aircraft (100) is on ground.

15. A non-transitory computer readable medium having stored thereon program code executable by at least one processor (202) for:
receiving an aircraft input indicative of a request to enable a maintenance mode of operation of at least one engine controller (104) for at least one engine (102) of an aircraft (100); and
in response to receiving the aircraft input, outputting, to a data collection and transmission unit (108) of the aircraft (100), a control signal comprising instructions to enable a wireless access point mode of operation of the data collection and transmission unit (108).
